# EUROPEAN PATENT APPLICATION

(11) **EP 1 650 095 A1**
(43) Date of publication of application: **26.04.2006**
(21) Application number: 04077924.1
(22) Date of filing: 22.10.2004
(51) Int. Cl.: B60T 13/66, B62D 53/06, B60T 8/00

(54) **Brake control for a vehicle system configurable as a tractor with an articulatable semi-trailer or as a tractor with a non-articulable semi-trailer**

(71) Applicant: Groenewold's Carrosseriefabriek B.V., 9601 LJ Hoogezand (NL)
(72) Inventor: Groenewold, Reinder, 9606 PZ Kropswolde (NL)
(74) Representative: Winckels, Johannes Hubertus F.

(57) **Abstract**

A tractor brake system includes a brake control unit (106) connected to brake actuators of the tractor (1) for controlling brake effort caused to be exerted by the brake actuators (82, 88) and at least one coupling member (C1) for coupling a semi-trailer brake system of the rigidly coupled semi-trailer (2) to the tractor brake system. The brake control unit (106) is adapted for controlling brake force distribution between brakes (83, 89) of axes (3, 4) of the tractor (1) according to at least a first control mode and for controlling brake force distribution between brakes (83, 89) of axes (3, 4) of the tractor (1) according to at least a second control mode and for operation in the second control mode in response to presence of the rigidly coupled semi-trailer (2).

## Description

### BACKGROUND OF THE INVENTION

The invention relates to a tractor for towing an articulatable semi-trailer and for towing a rigidly coupled semi-trailer. The invention further relates to a semi-trailer to be rigidly connected to such a tractor and to a road vehicle comprising a tractor and a semi-trailer rigidly connected thereto when in operative condition. The rigidly connected semi-trailer is understood to be at least fixed relative to the tractor against rotation about vertical axes and about horizontal axes transverse to the driving direction.

A tractor, semi-trailer and road vehicle of the above-identified type are known from Dutch patent 192 255. Other examples of such tractors, semi-trailers and combined vehicles are disclosed in U.S. patent 3 791 664.

In modern freight lorries brake effort distribution is controlled by a computerized brake effort distribution (also known as EBS) unit, which distributes braking between the axles of a truck or tractor and optionally between the truck or tractor and a semi-trailer or trailer. The brake effort distribution during light braking is typically controlled for reducing and/or evenly distributing brake wear, whereas during harder braking, brake effort is distributed commensurate with the levels of grip available at the several axles of the vehicle or combination, preferably taking into account dynamic load transfer between axles that occurs during hard braking. When braking very hard or during slippery conditions, anti-lock systems reduce braking effort in response to sensed locking of a wheel.

Vehicles of the above-identified type can be operated in four different configurations: the tractor can drive separately, with an articulatable semi-trailer attached to its fifth wheel, with a semi-trailer rigidly connected thereto and with a semi-trailer rigidly connected thereto and a trailer coupled to the semi-trailer. Moreover, the trailer coupled to the rigidly connected semi-trailer may be of a type having on or more centrally arranged axles or of the type having a steerable front axle and at least one rear axle.

### SUMMARY OF THE INVENTION

It is an object of the invention to provide a simple solution for controlling the braking in different configurations of a vehicle including a tractor and optionally an articulatable semi-trailer or a semi-trailer rigidly coupled to the tractor.

According to the invention, this object is achieved by providing a tractor according to claim 1 or, when tractor and semi-trailer are in rigidly coupled configuration, by providing a road transport vehicle according to claim 13. The invention may also be embodied in a semi-trailer according to claim 6 that is specifically adapted to be coupled to a tractor according to claim 1.

By providing that the brake control unit is adapted for operation in a second mode responsive only to the presence of a semi-trailer rigidly coupled to the tractor, the brake distribution is easily modified and adapted to the vehicle configuration in which the tractor is included. The semi-trailer's brake system is adapted to be controlled by the brake unit of the tractor, so that no separate brake control unit is necessary for controlling the intra vehicle brake distribution including the control of the brakes of the axle or axles of the semi-trailer rigidly connected to the tractor.

Particular embodiments of the invention are set forth in the dependent claims. Features applicable to the tractor or the semi-trailer may also be applied advantageously in the tractor or semi-trailer incorporated in a vehicle combination of a tractor and a semi-trailer rigidly connected thereto.

Further features, effects and details of the invention are described with reference to examples of embodiments of the invention shown in the drawings.

### BRIEF DESCRIPTION OF THE DRAWINGS

Fig. 1 is a side view of an example of a tractor according to the invention coupled to a semi-trailer of a type that is known as such;
Fig. 2 is a side view of the tractor shown in Fig. 1 rigidly coupled to an example of a semi-trailer according to the invention, the combination forming an example of a road transport vehicle according to the invention, a trailer of a type known as such being coupled to the semi-trailer;
Fig. 3 illustrates the operation of coupling and uncoupling of the tractor of Figs. 1 and 2 and the semi-trailer according to Fig. 2;
Fig. 4 is a schematic side view of the road transport vehicle according to Figs. 2 and 3 in which main features of the braking system are shown,
Fig. 5 is a schematic representation of an example of a brake system and a suspension system of a tractor according to the invention; and,
Fig. 6 is a schematic representation of an example of a brake system and a suspension system of a semi-trailer according to the invention.

### DETAILED DESCRIPTION

In the drawings corresponding parts are designated by mutually identical reference numerals.

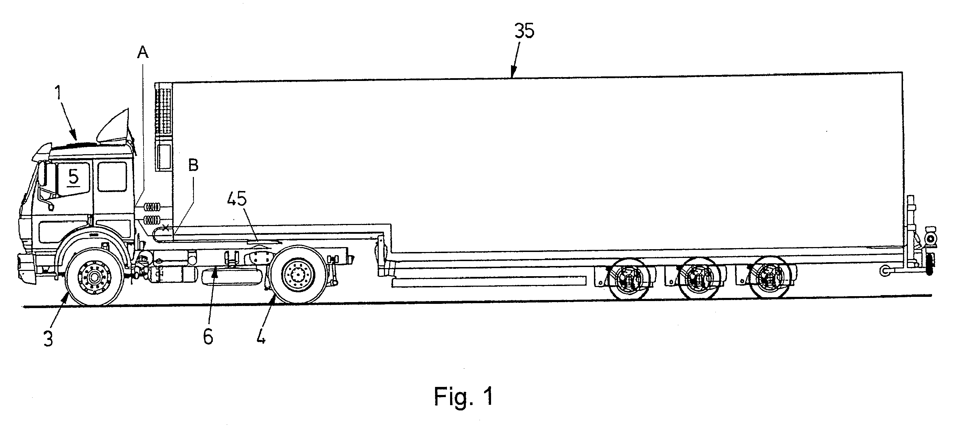

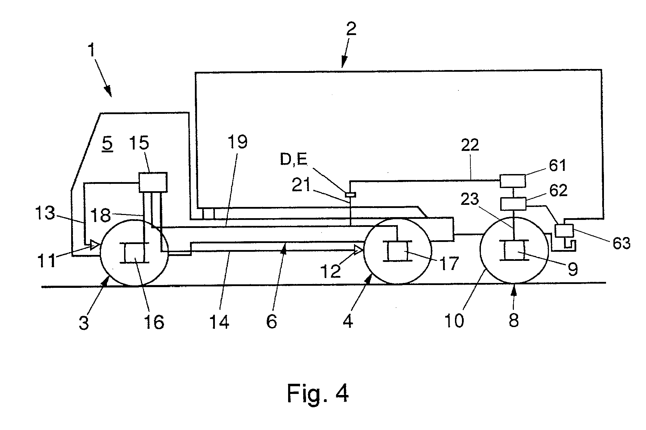

The tractor 1 shown in Figs. 1-4 has a front axle 3, a rear axle 4, a cabin 5 and a frame portion 6 projecting rearwardly from the cabin 5.

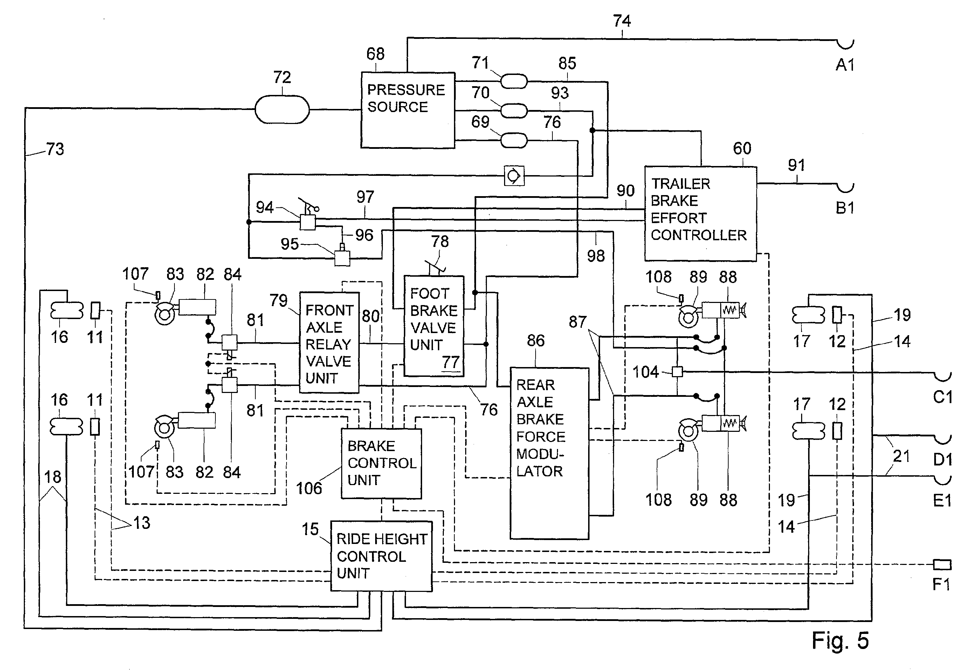

In the vehicle configuration shown in Fig. 1, the tractor 1 is coupled to a semi-trailer 35 that is articulatable relative to the tractor about a so-called fifth wheel 45. This is the vehicle configuration for which tractors 1 of the present type are conventionally used and for which the brake control system of the tractor 1 is designed. A coupling A is provided for supplying the coupled semi-trailer with pressurized fluid (in practice usually air) and a coupling B is provided for providing the semi-trailer 35 with control pressure for actuating operation of the brakes of the trailer under control of a trailer brake effort controller 60 (see Fig. 5). When braking a vehicle combination as shown in Fig. 1, a relatively large proportion of the total weight is exerted onto the rear axle 4 of the tractor 1, so that during hard braking a large proportion of the braking effort needs to be performed by the brakes of the rear axle of the tractor.

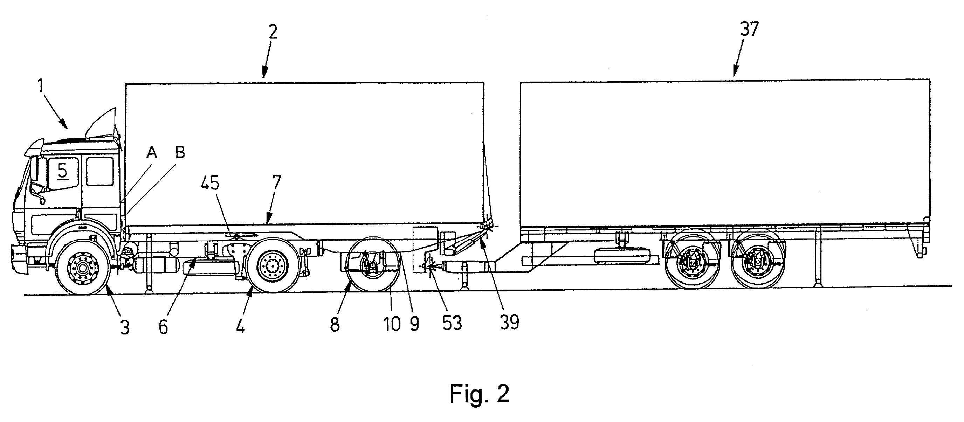

In the vehicle configuration shown in Figs 2-4, the tractor 1 and the semi-trailer 2 rigidly coupled thereto are fixed to each other such that mutual articulation about vertical axes and about horizontal axes transverse to the driving direction of the vehicle is essentially prevented. In the example shown in Figs. 2-4, the tractor 1 and the semi-trailer are also essentially blocked against mutual articulation about an axis parallel to the driving direction. In practice, the tractor 1 and the semi-trailer 2 will exhibit some normal degree of elastic chassis deformations during driving so that minor amounts of mutual rotation between the tractor 1 and the semi-trailer 2 will occur. Such movements are however so limited that the combination such as tractor 1 and trailer 2 is accepted as a single vehicle that meets the requirements to be fulfilled by a single non-articulated vehicle. This also allows the combination such as the tractor 1 and the semi-trailer 2 to be used for towing a trailer 37 or a trailer having a steerable front axis and a rear axis near the rear end of the trailer.

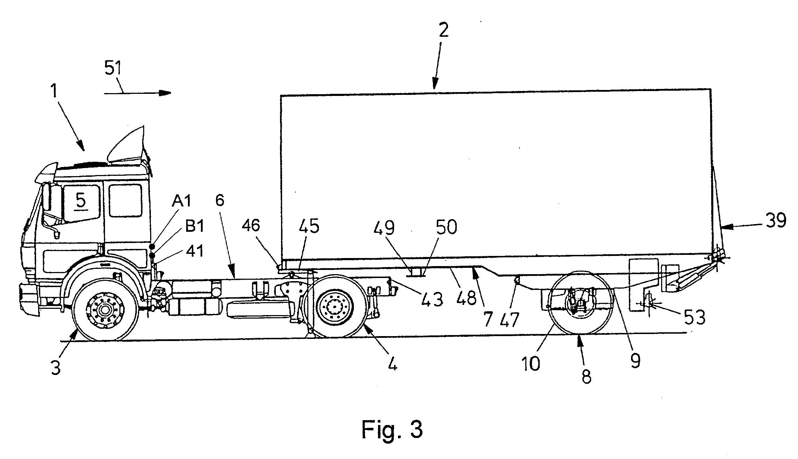

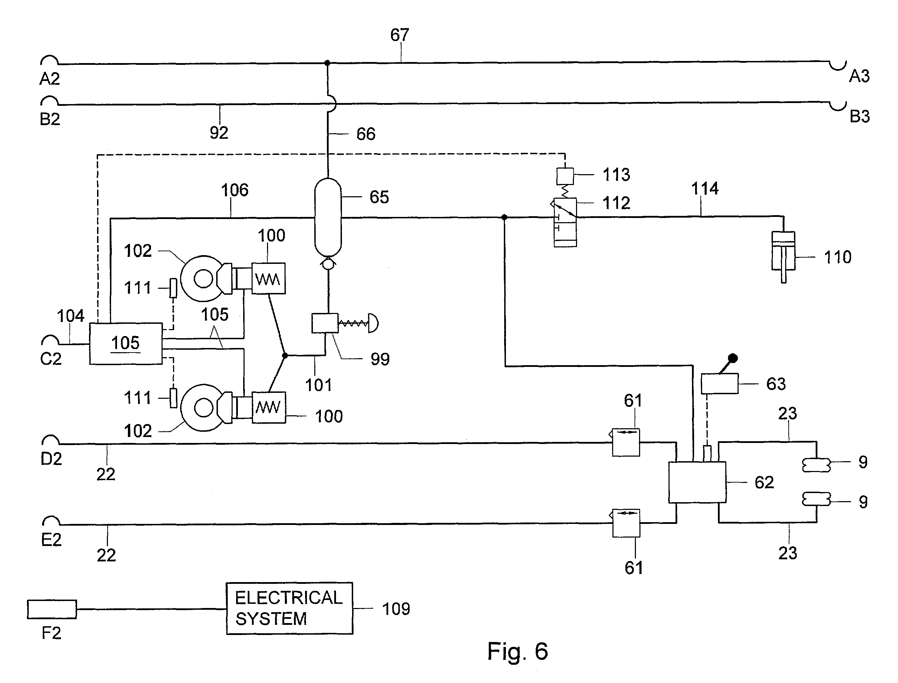

The semi-trailer 2 has a frame 7 (see Figs. 2 and 3) and a semi-trailer axle 8 including suspension elements 9 (see also Fig. 6) and wheels 10. According to the present example, the suspension elements 9 are provided in the form of air bellows. At a given axle load, the air volume in the bellows 9, and thereby the ride height, may be increased or reduced by increasing or, respectively reducing the amount of air in the air bellows 9. Thus, the compression/load relation of the suspension elements 9 may be changed by changing the amount of air in the bellows. Adding air to the bellows 9 would also entail an increase of the pressure in the bellows 9 and of the axle load since lifting the semi-trailer 2 will also cause the rear end if the tractor 1 to be lifted thereby reducing the load carried by the rear axle 4 of the tractor 1. The suspensions are linked for load distribution in compliance with predetermined vehicle specifications.

The tractor 1 according to the present example is equipped with a ride height control system including ride height sensors 11 at the front axle 3 including ride height sensors 12 at the rear axle 4 that are communicate via lines 13, 14 with a ride height control unit 15. The front axle 3 and the rear axle 4 of the tractor 1 are, according to the present example, each equipped with adjustable elastic suspension elements 16, 17 in the form of air bellows. The suspension elements 16, 17 communicate via pressurized air conduits 18, 19 with the control unit 15 that is arranged for controlling the amount of air in the suspension elements 16, 17. When the sensors 11 and/or 12 detects an average ride height above or below a prescribed ride height, air is supplied to or allowed flow out of the suspension elements 16 and/or 17 until the ride height is back to the prescribed average.

The tractor 1 is adapted for controlling the load of the semi-trailer axle 8 in accordance with the axle load of the rear axle 4 of the tractor.

According to the present example, conduits 21 branch off from the conduits 19 leading to the suspension elements 17 of the rear axle 4 of the tractor 1 and lead to coupling members D1 and E1. The coupling members D1 and E1 are adapted to be coupled to coupling members D2 and E2 of the semi-trailer 2, to which suspension pressure transfer conduits 22 are connected. The suspension pressure transfer conduits 23 extend through pressure reduction valves 61 to a height adjustment unit 62 (see also Fig. 6). From the height adjustment unit 62 further air pressure conduits 23 lead to the suspension elements 9 of the semi-trailer axle 8. For controlling the height adjustment unit 62, a manually operable control unit 63 having a lever for controlling the height is connected to the height adjustment unit.

The purpose of the height adjustment unit 62 is to bring the semi-trailer level and parallel with the rear end of the tractor 1, so that the tractor 1 can be coupled to the semi-trailer (see Fig. 3). For uncoupling the semi-trailer, the height adjustment unit 62 allows to lift the semi-trailer 2, so that its weight does not bear on the rear end of the tractor 1 and the tractor 1 can easily be advanced from under the semi-trailer 2. Pressure for lifting the semi-trailer 2 is supplied to the height adjustment unit via a conduit 64 that is connected to a pressure reservoir 65 of the semi-trailer 2. The pressure reservoir is connected via a conduit 66 to the permanent pressure transfer conduit 67 that is connected to coupling member A2 for connecting it to the permanent pressure coupling member A1 of the tractor 1.

After coupling the semi-trailer 2 to the tractor 1, the height adjustment 62 is de-activated and the pressure in the suspension members 9 of the semi-trailer axle 8 is controlled in accordance with the pressure that is passed on via the suspension pressure transfer conduits 22, 23 and the pressure reduction valves 61. The pressure reduction valves 61 may be adjustable to allow the semi-trailer to be coupled to tractors of different makes.

In operation, the ride height control system of the tractor 1 controls the ride height of the tractor 1 and the axle load of the axle 8 of the semi-trailer 2 is maintained in proportion with the axle load of the rear axle 4 of the tractor 1. Thus, the suspension of the semi-trailer 2 assists the tractor 1 in maintaining the vehicle ride height.

An example of the operation of coupling of tractor 1 to the rigidly coupled semi-trailer 2 is best seen in Fig. 3.

The frame portion 6 projecting rearwardly from the cabin 5 is provided with coupling member pairs 41, 42 in positions mutually spaced in driving direction of the tractor 1. The tractor 1 also is provided with a fifth wheel coupling member 45 of the type normally used for coupling semi-trailers 35 as shown in Fig. 1 to the tractor 1.

The semi-trailer 2 is provided with two pairs of coupling members 46, 47 adapted for co-operation with the coupling members 41 and, respectively, 43 of the tractor 1. Furthermore, the semi-trailer 2 is equipped with a coupling pin 49 arranged for co-operation with the fifth wheel coupling member 45 and including a flange 50 for engaging the fifth wheel coupling member 45 from below for keeping the semi-trailer 2 down against the fifth wheel coupling member 45.

Starting from the relative positions of the tractor 1 and the semi-trailer 2 as shown in Fig. 3, the height adjustment 62 having been operated to bring the semi-trailer 2 coupling members 46, 47 level with the coupling members 41, 42 of the tractor 1, mechanically coupling the tractor 1 to the semi-trailer 2 is carried out by reversing the tractor 1 until the coupling members 41 and 46, 45 and 49 as well as 43 and 47 engage.

In Figs. 5 and 6 also the brake systems of the tractor 1 and the semi-trailer 2 according to the present example are shown.

For supplying the brake system with pressurized air, a controlled pressure source 68 and pressure reservoirs 69, 70, 71 for the front axle brakes, the parking brake and, respectively, the rear axle brakes are provided. The pressure source 68 is also connected to a reservoir 72 of the suspension system, which communicates with the ride height control unit 15 via a pressure supply conduit 73. Furthermore a trailer pressure supply conduit 74 interconnects the pressure source with a coupling member A1 that is adapted for engagement to a coupling member A2 of the semi-trailer 2 or, in the alternative and as known as such from practice, to a similar coupling member of an articulatable semi-trailer such as the semi-trailer 35 in Fig. 1. The permanent pressure transfer conduit 67 of the semi-trailer 2 interconnects the coupling member A2 with a coupling member A3.

A front axle brake pressure supply conduit 76 interconnects the front axle brake pressure reservoir 69 with a duplex brake valve unit 77 operable by a brake pedal 78 and, via a separate branch, with a front axle brake relay valve unit 79. The front axle brake relay valve unit 79 is also connected to the duplex brake valve unit 77 via a front brake control pressure supply conduit 80. From the front axle brake relay valve unit 79, brake actuating conduits 81 lead to the brake cylinders 82 that are arranged for actuating the front brakes 83. Magnetic anti-lock brake valves 84 are arranged in the brake actuating conduits 81. In operation, the duplex brake valve unit 77 controls the front axle brake relay valve unit 79, which in turns controls to what extent pressure from the front axle brake pressure supply conduit 76 is applied to the brake cylinders 82, which pressure may be partially vented by the anti-lock valves 84 in the event of wheel lock during braking.

A rear axle brake pressure supply conduit 85 interconnects the rear axle brake pressure reservoir 71 with the duplex brake valve unit 77 operable by the brake pedal 78 and, via a separate branch, with a rear axle brake force modulator 86. From the rear axle brake force modulator 86 brake actuating conduits 87 lead to brake cylinders 88 that are arranged for actuating the rear brakes 89. The duplex brake valve unit 77 is also connected to the trailer brake effort controller 60 via a first trailer brake control pressure supply conduit 90. A second trailer brake control pressure supply conduit 91 connects the trailer brake effort controller 60 to a coupling member B1 that is adapted for engagement to a coupling member B2 of the semi-trailer 2 or, in the alternative and as known as such from practice, to a similar coupling member of an articulatable semi-trailer such as the semi-trailer 35 in Fig. 1. The semi-trailer 2 is provided with a separate trailer brake control pressure transfer conduit 92 that interconnects the coupling member B2 with a coupling member B3.

A handbrake pressure supply conduit 93 and its branches interconnect the handbrake brake pressure reservoir 70 with a handbrake relay valve 94, with a hand brake distribution valve 95 and with the trailer brake effort controller 60. The handbrake relay valve 94 is connected to the hand brake distribution valve 95 via a handbrake control pressure transfer conduit 96 and a trailer handbrake control pressure conduit 97 connects the handbrake relay valve 94 to the trailer brake effort controller 60. For controlling the handbrake function of the rear axle brake, the hand brake distribution valve 95 is connected via a handbrake release pressure conduit 98 to handbrake chambers of the brake cylinders of the rear axle brakes 89. When the handbrake is released, pressure is applied via the handbrake release pressure conduit 98, causing the brake cylinders to be released against the spring forces while brake pressure on the line 91 is released by the trailer brake effort controller 60 so that also the brakes of the trailer 37 or semi-trailer 35 are released. The opposite effects are achieved if the handbrake is activated.

To maintain the semi-trailer 2 stationary if it is not coupled to a tractor 1, the semi-trailer 2 is equipped with a manually operable handbrake valve 99 that causes pressure form the semi-trailer pressure reservoir 65 to be applied to the handbrake chambers of the semi-trailer brake cylinders 100 via handbrake control pressure conduits 101 if the handbrake is operated to be released. Thus brakes 102 of the semi-trailer axle 8 are released. To apply the handbrake, the valve 99 is operated to close off the connection between the brake cylinders 100 and the pressure reservoir 65 and to vent pressure from the handbrake chambers of the brake cylinders 100.

For operating the brakes 102 of the semi-trailer axle 8 during operation, a semi-trailer brake control pressure conduit 103 is connected to the brake actuating conduits 87 via a double check valve 104. The double check valve ensures that the highest pressure from the left and right hand brakes is applied to via the semi-trailer brake control pressure conduit 103 and that pressure transfer between the left and right hand brake actuating conduits 87 is prevented. The semi-trailer brake control pressure conduit 103 is connected to a coupling member C1 that is adapted to be coupled to a coupling member C2 of the semi-trailer 2. From the coupling member C2, a brake control pressure conduit 104 of the semi-trailer 2 is connected to an anti-lock modulator 105. Brake actuating conduits 105 connect the anti-lock modulator 105 to the brake cylinders 100 for operating the brakes 102 of the semi-trailer 2. A pressure supply conduit 106 connects the pressure reservoir 65 to the anti-lock modulator 105.

For controlling the brakes, it comprises a brake control unit 106 (Fig. 5). The brake control unit is connected via signal transfer lines (represented by dashed lines) with the brake valve unit 77 to for obtaining input indicating whether the brake pedal is applied, the ride height control unit 15 for obtaining input regarding axle load distribution, to front axle angular velocity sensors 107 for obtaining input regarding angular velocities of the front wheels of the tractor 1 and to a coupling member F1 for obtaining input whether or not a rigidly coupled semi-trailer 2 is connected to the tractor 1. The coupling member F1 is adapted to be coupled to a coupling member F2 of the semi-trailer 2, which in-turn is connected to the electrical system 109 of the semi-trailer 2. The coupling member F2 or the electrical system 109 may for instance be coded to signal the type of semi-trailer 2 to the brake control unit 106.

For controlling brake distribution and braking effort applied to the wheels of the tractor 1, the brake control unit is connected via signal transfer lines to the front axle brake relay valve unit 79 for controlling front axle braking effort, to the anti-lock valves 84 to reduce braking effort in the event of front wheel lock, to the rear axle brake force modulator 86 for controlling rear axle brake effort and to the trailer brake effort controller to control braking effort of a trailer 37 or articulatable semi-trailer 35 coupled to the tractor 1.

The anti-lock function of the rear brakes is achieved through signalization of rear wheel velocities from rear wheel angular velocity sensors 108 to the rear axle brake force modulator 86, the modulator being adapted to reduce brake pressure on the respective one of lines 87 if wheel lock is detected.

During conventional operation, if the duplex brake valve unit 77 is actuated, the front axle brake relay valve unit 79 controls to what extent pressure from the front axle brake pressure supply conduit 76 is applied to the brake cylinders 82. Brake pressure may be vented by the anti-lock valves 84 in the event of wheel lock during braking. The brake control unit 106 controls the rear axle brake force modulator 86 that determines to what extent pressure from the rear axle brake pressure supply conduit 85 is applied to the brake cylinders 88 of the rear wheels of the tractor 1 and, if a trailer 37 or articulatable semi-trailer 35 is connected, the brake control unit 106 controls the trailer brake effort controller 60 to determine to what extent brake pressure applied by the foot brake valve unit 78 is passed on to the second trailer brake control pressure supply conduit 91 for causing the trailer 37 or articulatable semi-trailer to brake.

The brake control unit 106 is further adapted for controlling brake force distribution between brakes of axes of the tractor 1 according in accordance with a second control mode different from the above-described first control mode. In response to detection of a rigidly coupled semi-trailer 2, the brake control unit 106 selects the second mode of operation and in absence of detection of a rigidly coupled semi-trailer 2 the brake control unit 106 selects the conventional first mode of operation. The second mode of operation may for instance be operation under control of a second brake control program that is identical to or similar to a brake program normally used for controlling brakes of a freight lorry having three axles, a load carrying surface and, optionally, a coupling member for connecting a self-supported trailer behind the lorry. According to the present example the presence of the rigidly connected semi-trailer 2 is detected by a signal received via coupling member F1. The presence of the rigidly connected semi-trailer 2 may also be detected by a sensor for sensing air pressure in the air bellows and/or brake system of the rigidly connected semi-trailer 2. Such an air-pressure sensor may be installed on the rigidly connected semi-trailer 2 or be installed on the tractor and communicate with the air bellows and/or brake lines of the semi-trailer 2 via an air conduit and a pneumatic coupling.

Since the coupling member for coupling a semi-trailer brake system of the rigidly coupled semi-trailer 2 to the tractor brake system is connected to brake pressure supply conduits 87 connecting to the brakes 89 of the rear axle of the tractor 1 for operating the rear axle brakes 89, the braking effort directed to the semi-trailer axle brakes 102 is controlled in accordance with the brake effort directed to the brakes 89 of the closely adjacent rear axle 4 of the tractor 1 in a simple manner.

That the tractor brake system further comprises at least one coupling member B1 for controlling brake effort of a semi-trailer 35 and that the brake control unit is adapted for controlling brake effort actuation of an articulated semi-trailer 35 when operating in the first operating mode and for controlling brake effort actuation of a trailer 37 connected to the rigidly coupled semi-trailer 2 when operating in the second operating mode, provides the advantage that the coupling members A1, B1, to which conventionally a semi-trailer 35 is connected, may be used for direct or indirect connection to the braking system of a trailer 37 to be towed behind the rigidly connected semi-trailer 2 and to be controlled in essentially the same manner as the brakes of a trailer coupled behind a (usually three axle) freight lorry having its own load carrying space.

Because the tractor includes suspension pressure transfer coupling members D1, E1 for connection to at least one elastically compressible suspension element 9 of the semi-trailer axle 8, the coupling members D1, E1 being connected via coupling members D2, E2 and conduits 22 of the semi-trailer 2 for controlling the suspension element 9 of the semi-trailer axle 8 in accordance with an axle load of the at least one rear axle 4 of the tractor 1, axle load dependent braking of the semi-trailer axle 8 can be achieved in a simple manner in conjunction with axle load dependent braking of the rear axle 4 of the tractor 1.

The data regarding the axle loads for axle load dependent braking of the semi-trailer axle 8 is obtained in a particularly simple manner, because the suspension elements 17 of the tractor 1 include pressure chambers arranged for exerting support pressure to the wheels of the rear axle 4 of the tractor 1 in accordance with the pressure in the pressure chambers and because the suspension pressure transfer coupling members D1, E1 communicate with the pressure chambers.

The second coupling members A2, B2 of the semi-trailer 2 for coupling the pressurized fluid transfer conduits 67, 92 of the semi-trailer 2 to the tractor 1 are connected to third coupling members A3, B3 at an end of the pressurized fluid transfer conduits 67, 92 opposite to the second coupling members A2, B2 for coupling a brake system of a trailer 37 to the pressurized fluid transfer conduits 67 92. Thus, the pressure supply to a trailer 37 coupled behind the rigidly coupled semi-trailer 2 can communicate with the coupling members A1, B1 of the tractor 1 that are conventionally used for supplying pressure to a coupled articulatably coupled semi-trailer 35 of the type shown in Fig. 1. This, in turn allows the brake control unit 106 to be reprogrammed for operation in a mode with a trailer 37 behind the rigidly coupled semi-trailer 2 in a relatively simple manner, because brakes 83, 89, 102 of the tractor 1 and of the rigidly coupled semi-trailer 2 are controlled as tractor brakes and the control of the brakes of the trailer 37 to be towed behind the semi-trailer 2 is achieved in a manner analogous to the control of the brakes of an articulatably coupled semi-trailer 35.

Since, in the second operating mode, the control pressure transfer conduit 92 serves for directing control pressure to the brakes of the articulately coupled trailer 37 instead of to the brakes of the articulatably coupled semi-trailer 35, the second and third coupling members A2, B2 and A3, B3 are preferably interconnected directly.

To facilitate driving through bends with a small radius, the wheels of the semi-trailer axle 8 are passively steerable to follow the radius of curvature through which the tractor is driven. To provide stable driving characteristics of the tractor/semi-trailer combination at higher speeds, a locking assembly including a locking unit 110 for locking the wheels of the semi-trailer axle 8 in an orientation for rotation in a plane a parallel to the driving direction is provided. The locking assembly is adapted for locking the wheels of the semi-trailer axle 8 in the described orientation in response to a speed signal indicating that the semi-trailer 2 is driving at a speed above a predetermined limit. The locking assembly may also be adapted for locking the wheels when the semi-trailer is reversing with the wheels of the semi-trailer axle 8 in the described orientation.

The speed signal in response the wheels of the semi-trailer axle are locked can be obtained in a simple manner from speed sensors 111 that sense the angular velocity of the wheels of the semi-trailer axle 8 and that are connected to the anti-lock modulator 105 of the semi-trailer 2. For actuating the locking assembly, a branch of the pressure supply conduit 64 is connected to a semi-trailer axle locking valve 112 of the locking assembly that is operable by an actuator 113 of the locking assembly connected to the anti-lock modulator 105 for obtaining signals in accordance with the current velocity of the semi-trailer. The semi-trailer axle locking valve 112 is connected to the locking unit 110 by an unlocking control pressure transfer conduit 114 of the locking assembly.

## Claims

1. A tractor for towing an articulatably coupled semi-trailer (35) and for towing a rigidly coupled semi-trailer (2) in a driving direction, comprising:
a front axle (3) having steerable wheels,
at least one rear axle (4),
a cabin (5),
a frame portion (6) projecting rearwardly from the cabin (5) and provided with at least two coupling members (41, 42, 43, 44) mutually spaced in driving direction for fixing a semi-trailer (2) to the tractor (1) at least against articulation about vertical axes and about horizontal axes transverse to the driving direction of the tractor (1);
a fifth wheel coupling member (45) mounted to the frame portion (6); and
a tractor brake system including brakes (83, 89), brake actuators (82, 88), a brake control unit (106) connected to the brake actuators of the tractor (1) for controlling brake effort caused to be exerted by the brake actuators (82, 88) and at least one coupling member (C1) for coupling a semi-trailer brake system of the rigidly coupled semi-trailer (2) to the tractor brake system;
wherein the brake control unit (106) is adapted for controlling brake force distribution between brakes (83, 89) of axes (3, 4) of the tractor (1) according to at least a first control mode and for controlling brake force distribution between brakes (83, 89) of axes (3, 4) of the tractor (1) according to at least a second control mode and for operation in the second control mode in response to presence of the rigidly coupled semi-trailer (2).

2. A tractor according to claim 1, wherein the coupling member (C1) for coupling a semi-trailer brake system of the rigidly coupled semi-trailer (2) to the tractor brake system is connected to brake pressure supply conduits (87) connecting to the brakes (89) of the at least one rear axle of the tractor (1) for operating the rear axle brakes (89).

3. A tractor according to claim 2, wherein the tractor brake system further comprises at least one coupling member (B1) for controlling brake effort of an articulatably coupled semi-trailer (35), the brake control unit (106) being adapted for controlling brake effort actuation via said coupling member (B1) as an articulatably coupled semi-trailer (35) when operating in the first operating mode and for controlling brake effort actuation via said coupling member (B1) as a trailer (37) connected to the rigidly coupled semi-trailer (2) when operating in the second operating mode.

4. A tractor according to any one of the preceding claims, further comprising at least one suspension pressure transfer coupling member (D1, E1) for connection to at least one elastically compressible suspension element (9) of the semi-trailer axle (8), wherein the coupling member (D1, E1) is connected for actuating the suspension element (9) of the semi-trailer axle (8) in accordance with an axle load of the at least one rear axle (4) of the tractor (1).

5. A tractor according to claim 4, wherein at least one elastically compressible suspension element (17) of the at least one rear axle (4) of the tractor (1) includes a pressure chamber arranged for exerting support pressure to the wheels of the at least one rear axle (4) of the tractor (1) in accordance with the pressure in the pressure chamber and wherein the at least one suspension pressure transfer coupling member (D1, E1) communicates with the pressure chamber.

6. A semi-trailer vehicle towable in a driving direction, including at least two coupling members (46, 47, 49-50) mutually spaced in driving direction for fixing the semi-trailer (2) to a tractor (1) at least against articulation about vertical axes and about horizontal axes transverse to the driving direction of the semi-trailer (2), at least one semi-trailer supporting semi-trailer-axle (8), wheels (10) and a semi-trailer brake system including brakes (102), the semi-trailer brake system including a coupling member (C2) for coupling to the tractor brake system for operation under control of the tractor brake system when in operating condition.

7. A semi-trailer according to claim 6, further comprising at least one second coupling member (A2, B2) for coupling at least one pressurized fluid transfer conduit (67, 92) to the tractor (1) and at least one third coupling (A3, B3) member at an end of the pressurized fluid transfer conduit (67, 92) opposite to said at least one second coupling member (A2, B3).

8. A semi-trailer according to claim 7, wherein the at least one pressurized fluid transfer conduit (67, 92) comprises a control pressure transfer conduit (92) directly interconnecting the second and third coupling members (B2, B3).

9. A semi-trailer according to any one of the claims 6-8, wherein wheels (10) of the at least one semi-trailer axle (8) are steerable, further comprising a locking assembly (110, 112-114) for locking the wheels (10) of the at least one semi-trailer axle (8) in an orientation for rotation in a plane a parallel to the driving direction, the locking assembly being adapted for locking the wheels (10) in said orientation at least in response to a speed signal indicating that the semi-trailer (2) is driving at a speed above a predetermined limit.

10. A semi-trailer according to claim 9, further comprising an anti lock brake control system (105, 111) including velocity sensors (111), the anti-lock brake control system (105, 111) being connected to the locking assembly (110, 112-114) for providing a signal in accordance with the current velocity of the semi-trailer (2) to the locking assembly (110, 112-114).

11. A semi-trailer according to any one of the claims 6-10, further comprising at least one suspension element (9) controllable for controlling a load/compression relation of the at least one semi-trailer axle (8) and means (D2, E2, 22) for controlling the suspension element (9) in accordance with the axle load of the at least one rear axle (4) of the tractor (1).

12. A semi-trailer according to claim 11, wherein the suspension element (9) includes a pressure chamber arranged for exerting support pressure to the wheels (10) of the at least one semi-trailer axle (8) in accordance with the pressure in the pressure chamber, the pressure chamber communicating with a suspension control coupling member (D2, E2) for connection to the tractor (1), for applying a pressure to the pressure chamber in accordance with pressure transferred via the suspension control coupling member (D2, E2).

13. A road transport vehicle, comprising:
a tractor (1) for driving in a driving direction, including front axle (3) with steerable wheels, at least one rear axle (4), a cabin (5), a frame portion (6) projecting rearwardly from the cabin (5), a fifth wheel coupling member (45) for articulatably coupling to a semi-trailer (35) and a tractor brake system including brakes (83, 89), brake actuators (82, 88) and a brake control unit (106) for controlling brake effort caused to be exerted by the brake actuators (82, 88); and
a rigidly coupled semi-trailer (2) at least fixed relative to the tractor (1) against articulation about vertical axes and about horizontal axes transverse to the driving direction of the vehicle, when operatively coupled including at least one semi-trailer supporting semi-trailer-axle (8), wheels (10) and a semi-trailer brake system including brakes (102), the semi-trailer brake system being coupled to the tractor brake system for operation under control of the tractor brake system when in operating condition;
wherein the brake control unit (106) is adapted for controlling brake force distribution between brakes (83, 89) of axes (3, 4) of the tractor (1) according to at least a first control mode and for controlling brake force distribution between brakes (83, 89) of axes (3, 4) of the tractor (1) according to at least a second control mode and for operation in the second control mode in response to presence of the rigidly coupled semi-trailer (2).
